# EUROPEAN PATENT SPECIFICATION

(11) **EP 2 670 655 B1**
(45) Date of publication and mention of the grant of the patent: **20.04.2016**
(21) Application number: 12705701.6
(22) Date of filing: 03.02.2012
(51) Int. Cl.: B62K 11/04, B62K 11/06, B62K 19/00, B62K 11/08, B62K 19/16

(54) **ELECTRIC MOTORCYCLE**
ELEKTRISCHES MOTORRAD
MOTOCYCLE ELECTRIQUE

(30) Priority: 03.02.2011 GB 201101879
(43) Date of publication of application: 11.12.2013
(73) Proprietor: Agility Global Ltd, London WC1N 1DD (GB)
(72) Inventor: MARAZZI, Lawrence, London WC1N 1DD (GB)
(74) Representative: Harman, Paul North
(86) International application number: PCT/GB2012/000114
(87) International publication number: WO 2012/104592

(56) References cited:
- FR-A1- 2 827 255
- US-A1- 2005 092 538
- US-A1- 2006 000 655
- US-A1- 2010 133 030

## Description

This invention relates to electric motorcycles, particularly high performance electric motorcycle.

Designing an electric motorcycle includes several challenges that over a conventional motorcycle powered by petrol Batteries generally have a lower energy density than- petrol, so that to achieve the same performance in terms of both speed and range of travel, a large proportion of the weight and volume of the motorcycle must be devoted to the batteries. This adds to the total weight of the motorcycle and is detrimental to the speed and range of the motorcycle.

Document US 2100133030 corresponds to the preamble of claim 1.

To achieve good performance, it is important to minimise the weight of the motorcycle as a whole, while retaining sufficient strength to support the motorcycle's components.

It is an object of the present invention to provide an electric motorcycle having a low weight and good performance.

According to the present invention there is provided an electric motorcycle to claim 1.

An embodiment of the invention will now be described with reference to the drawings, of which;
- Figure 1: shows a side elevation of a motorcycle
- Figure 2: shows a perspective view of the motorcycle with some parts removed
- Figure 2a: shows an enlarged view of part of the motorcycle shown in figure 2
- Figure 3: shows a partly exploded perspective view of the motorcycle
- Figure 4: shows a partly exploded perspective view of the motorcycle.

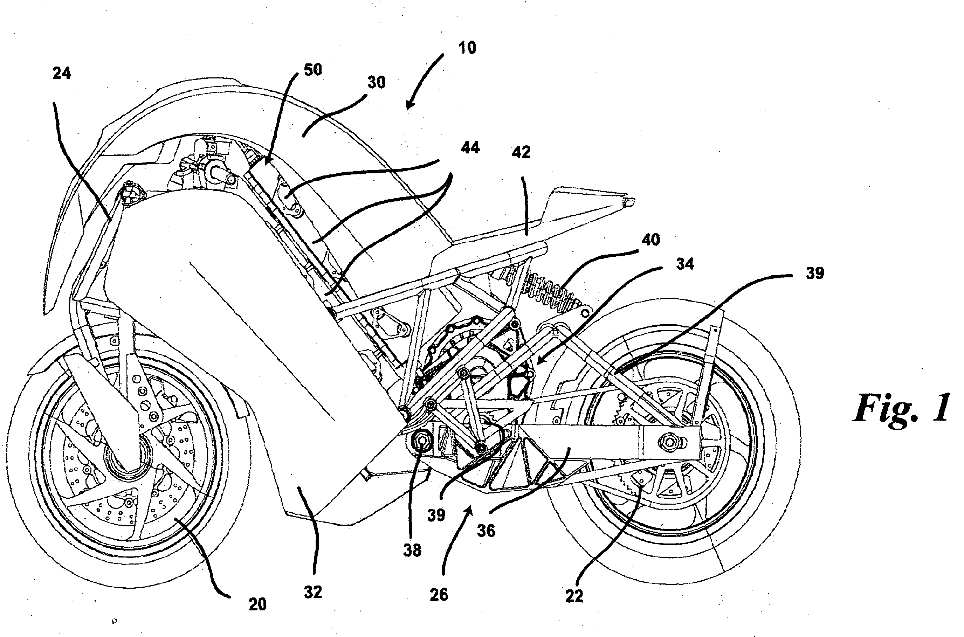

Referring to figure 1, a motorcycle 10 comprises front and rear wheels 20, 22, connected to front and rear suspensions 24, 26 respectively, linked by a chassis. The chassis is formed from a monocoque frame 50 and the motor and transmission 34. The monocoque frame is covered by a top fairing 30 and side fairings 32.

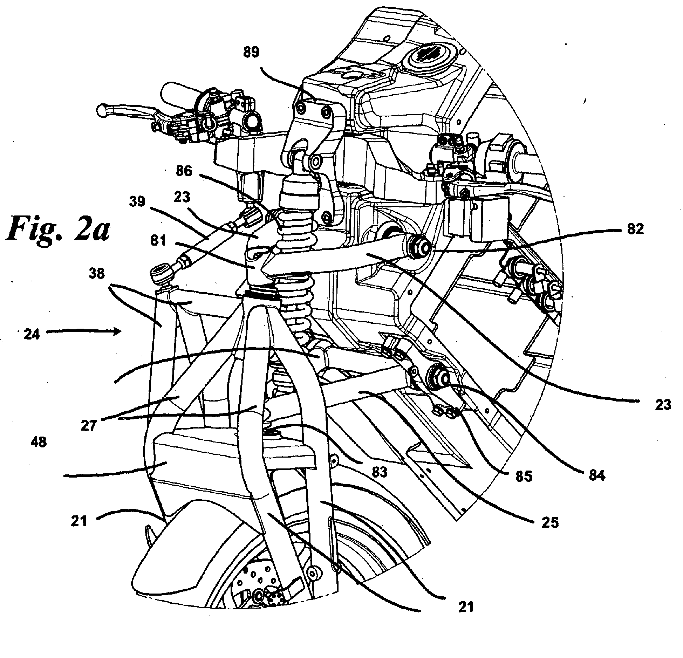

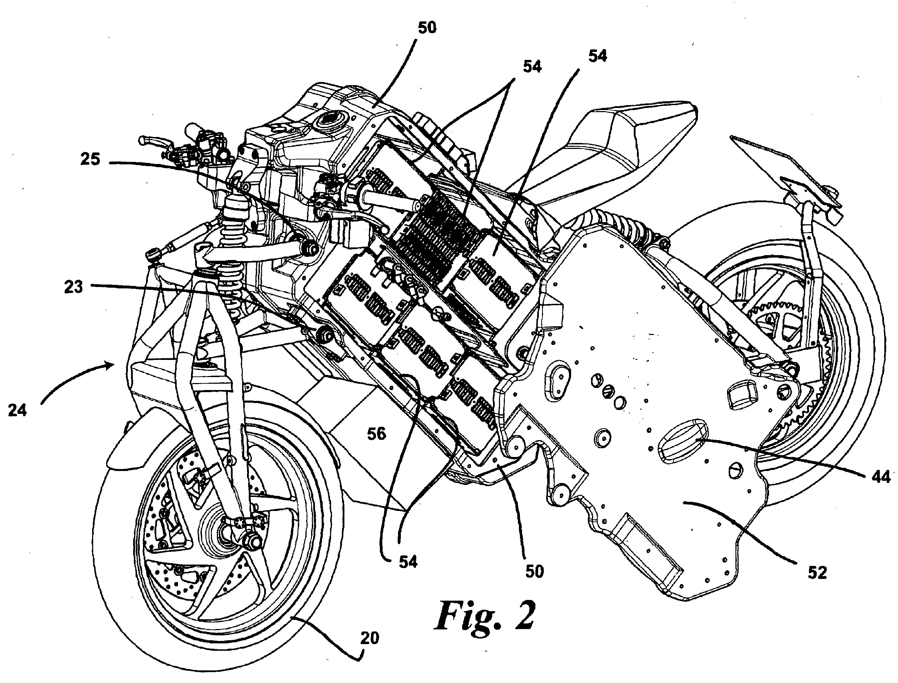

The monocoque frame 50 can be seen more clearly in figure 2 and subsequent drawings. Referring to figure 2, the monocoque frame is formed as a shaped box-like structure from a composite material, such as a resin and carbon fibre structure. This can be easily accurately shaped using a one-step moulding processes, which can be sealed. A variety of techniques from hand layup through resin transfer moulding through injection moulding may be employed. The monocoque frame al so ideally includes a honeycomb layer, the walls of the honeycomb cells standing perpendicular to the skin of the monocoque frame.

The monocoque frame 50 is hollow, the internal volume including space for the batteries 54. Six batteries are shown in the present embodiment, arranged in two rows of three, the upper row being position in an offset manner slightly forward of the lower row when considered in the plane of the rows. The shape of the monocoque frame in this design has been chosen to largely conform to the batteries. Since the monocoque frame is based on cuboid (indeed they may be almost cubic) batteries, the frame shape has a considerable width and height when considered along its main axis, in addition to its length which extends from the front suspension to close to a rear swingarm pivot point 38 on the motor. The maximal cross sectional area across all three principal axes, in particular a very wide cross section along the principle axis of load transmission between front suspension and rear suspension, gives the frame an inherently high stiffness to weight ratio. Also interior bulkheads give rigidity. Referring again to figure 1, the lower part of the monocoque frame 50 is shaped to fit against and engage with the motor and transmission 34.

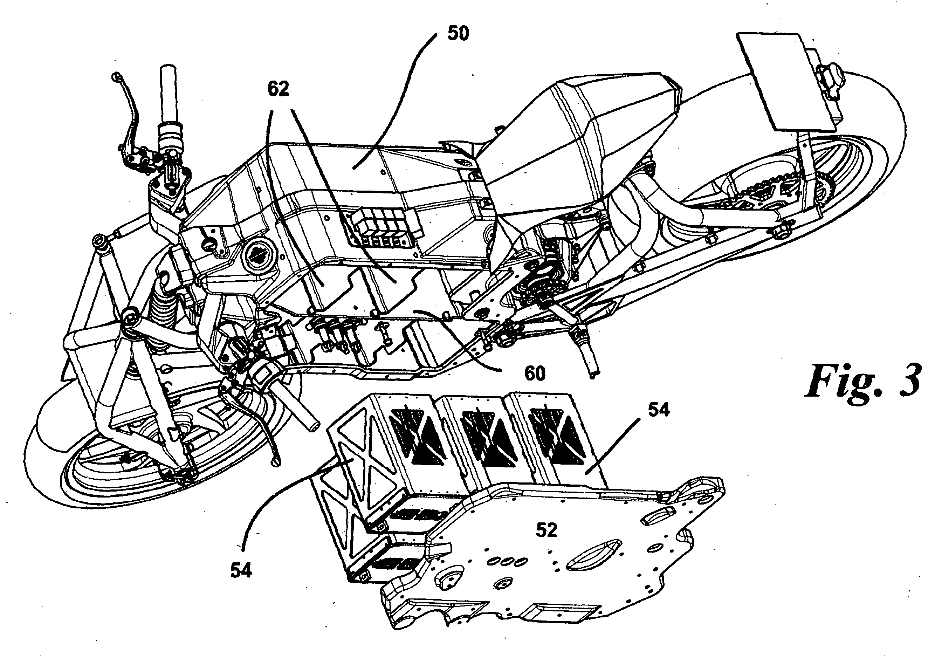

Referring to figures 3 and 4, the monocoque frame 50 has an internal bulkhead 60 extending between the two rows of batteries 54, and further internal bulkheads 62 separating each battery in a row from the neighbouring battery or batteries. The bulkheads provide additional stiffness, particularly torsional stiffness. The monocoque frame 50 and batteries 54 are enclosed on each side by a lid 52. The monocoque frame 50 also has mounting inserts bonded to it, which allow the motorcycle's other components to be attached to the top and side frames using bolts or similar fasteners.

Each lid 52 is formed of composite material in the same way as the main monocoque frame 50, and when fixed to the monocoque frame 50 together form a unitary enclosed monocoque structure. The lids 52 themselves contribute to the strength and stiffness of the chassis, particularly in a vertical plane along the axis of the motorcycle.

Being manufactured from such a composite material, the battery boxes formed by the monocoque frame 50 and lids 52 which house the batteries can straightforwardly be manufactured to be watertight.

The monocoque frame can of course house different numbers or arrangements of batteries using such a modular system, typically 3, 6, 8 or 12 batteries arranged in one or two rows. The modular structure makes for improved serviceability, and manufacturing efficiency. The entire battery management system is housed within the modules, allowing for the removal or addition of batteries simply and quickly.

The removal of the lid 52, gives access to the battery bays from one side of the bike without the need to disassemble any of the suspension or primary structures of the motorcycle. This gives a massive improvement to serviceability and ease of assembly on the production line. The 1 id may be secured Although the lids contribute to the stiffness and strength of the chassis, the main monocoque frame 50 is itself stiff enough for partly assembled bikes to be wheeled during assembly without the need for mobile jigs or frames. The accessibility of batteries for service or changing during long term or trip use can be further improved by adapting the battery lid to allow palletization of the modules, such that when the lid is removed, the modules are removed with it, the batteries or battery modules being connected through fast connectors such that when the lid is re-attached, the batteries are automatically electrically connected to the motorcycle's power distribution system. This allows fast-changing of the battery pack if required, such as under race conditions. This can be reduced to a matter of 20-50 seconds.

The lid of the battery bays of the monocoque frame forms a major structural component and forms the dual function of sealing the monocoque frame and acting as one of the primary structural skins of the monocoque frame.

Different arrangements of lid are possible, such a single lid as shown in figures 2 to 4, or a double bay arrangement where two lids each give access to a separate row of batteries. The Hd may be attached, for example, using quick release bolts to the monocoque frame, or could be provided with a hinge. The lids could be provided with handles 44.

In allowing a very high volume fraction of batteries, this also allows the bike to remain small and compact. The battery volume of the main monocoque frame and lid which together make up the monocoque structure can be in excess of 80%. Thus improving handling due to the use of a shorter wheel base, improve changes of direction, reduced weight overall of vehicle by allowing a lower quantity of material and the shorter wheel base allowing a higher torsional rigidity to be achieved. In addition, the higher capacity of batteries allows greater current output, giving greater power, acceleration and range as befits a performance motorcycle. Whereas moped and scooter type bikes experience relatively small forces and overcome this using rigid and heavy material, a performance bike may experience 1.6-2 tons of force through either its front or rear suspension to the chassis at any one time.

Also, for a performance bike, a large number of batteries equate to a large weight, so the provision of a stiff, lightweight frame is especially important to achieve an electric performance bike. Typical ly, the batteries may weigh 72kg compared to a monocoque frame of 22kg, and a total motorcycle weight of 175kg.

In addition, minimising the heat input into the monocoque frame also reduces the need to control the thermal environment to protect the battery cells, which may require heat dissipation during high discharge operation.

Composite and interior skin may be used in order to mitigate any possibility of fire or electrical danger.

The battery packaging incorporates high-level environmental protection. The entire sub-packs of each battery 54 are sealed to 1PH66/ 1PH67 level protection against water and environmental contaminants. To address safety issues, isolation of all high power connections are placed internally within sub-packs. The system also incorporates thin aluminium films which act as both heat sink and start-up heater.

The 2-stage cell module pack system also functions as a high capacity heat-sink. This system incorporates two functions. The first is a highly effective thermal conductive path away from the cells to prevent overheating during operation. The second function is that the system conversely achieves high thermal insulation. Due to the insulation function, it gains low-energy heat-up to operating temperature under extreme low temperature conditions. Thus the system efficiently manages both extremes of the cell operating temperature range.

The 2-Stage cell module pack system al so achieves both penetrative impact resistance, and pack macro deformation resistance to IK 10 standard. Pouch cells are vulnerable to external mechanical damage and the 2-Stage cell module/module pack design prevents such possibilities. High-level Impact Energy Modulation and Control can also be provided, the control system being designed to minimise deceleration/acceleration spikes during impact events.

Referring back to figure 2, the front wheel 20 is mounted in a double wishbone suspension 24. The axle of the front wheel 20 is mounted on lower forks 2 1 on a fork subframe assembly 27. The fork assembly 2 1 is coupled to the monocoque frame 50 by an upper wishbone 25 and a lower wishbone 23. The upper wishbone 23 comprises a bifurcated pair of struts which meet at a universal joint 8 1 on the fork subframe assembly, and each strut is attached to the monocoque frame 50 at a pair of mounting inserts 82. The lower wishbone 25 similarly comprises a pair of struts that meet at a universal joint 83 attaching the lower wishbone 25 to the fork subframe assembly 27, and which are attached to either side of the monocoque frame 50 at a fixing points 84.

The fixing points may themselves be spaced from the monocoque frame 50 e.g. by brackets 85.

The fork subframe assembly 27 also includes a steering frame 38, so that the handlebars are coupled to the fork subframe assembly 27 by a steering rod 39. Shock absorption is provided by a spring and damper mounted between the fork subframe assembly 27 and (via a head bracket 89) the monocoque frame 50. Unlike a telescopic steering column, the suspension and steering are separated in this front suspension. It will be realised that the joints and struts may be varied to provide other suspension frameworks that provide four or more coupling points to the monocoque frame 50.

The frame cross section is designed to both maximize internal volume and match the width of the front and rear suspension inboard mounting points, the multiple connection points of the front double wishbone suspension are ideally suited for such a design. Because of the matched width, the front and rear inboard mounting points of the suspension transmit their load into the skins of the monocoque in the most efficient manner structurally. The mounting points arrange the shape of the monocoque such that the inboard suspension loads are transmitted principally into the monocoque parallel to the surfaces of themonocoque. This is more efficient than would be the case of fork-type front suspension through a single pivoting axis as in a conventional motorcycle.

Thus the front suspension is attached to double wishbones 23, 25 at four points on the monocoque frame 50 provided by mounting inserts widely spaced both laterally and vertically from each other. This allows the load transmitted from the front wheel to be distributed laterally on the monocoque frame skin in an efficient manner. A thin shell provided by a monocoque frame skin withstands forces more effectively when the force is transmitted in the plane of the skin. Thus the use of a multiple contact points of a double wishbone suspension is more stable using a fork-type suspension in a telescopic steering column, which is typically mounting on a motorcycle frame at two points. Also, points at which the steering column bear against the wishbone can be spaced further apart, thereby reducing the moment of force exerted by the front suspension on its bearing points as the bike brakes, which tends to cause the bike to dive.

Attached the front suspension 24 to the side frame using bolts to the mounting, inserts means that no heating or welding is required during assembly. This avoids distortion and changes to the stability and tolerance of the assembled parts due to thermal input that would be incurred by use of a welding process. The entire structure is not subject to any form of thermal defamation to join it, and relies instead on accurate tooling and moulds.

In additional to the structural stiffness and stability provided by the monocoque frame, fewer parts and less construction is required than is the case for a motorcycle frame composed of for example tubular strutwork, while the monocoque frame provides good impact protection of sensitive electronic systems, and good sealing from water, environmental factors, and foreign contaminants. The stiffness of the frame also aids direct actuation of the motorcycle's suspension, which is described in more detail below.

A particular advantage of a composite monocoque frame is the weight saving over a metal strutwork frame or machine cut metal sheet. The lower weight gives better energy efficiency, mitigating the weight of the batteries, and also improves the speed of changes in direction, and the acceleration and breaking, and lowers the wear and tear on brakes, tyres, and charger system due to lower load on each part.

The motor 24 is attached to the top frame 30 and side frame 32, again using bolts that engage with mounting inserts provided in the frames 30, 32. The rear wheel 22 is structurally connected to the motor by a swing arm 36 mounted on a pivot point 38 on the motor. Stiffness is provided by a framework 38 connected to a shock absorber 40 mounted beneath the seat 42 and top frame 30.

It will be noted that this arrangement concentrates the major masses of the motorcycle, the batteries and the motor, closely around the centre of gravity of the bike. This reduces the polar moment of inertia of the bike about all three axes, meaning that less work is required to change the bike's directions of travel, that is, which improves the bike's handling. The weight of the batteries are spread over the monocoque frame using the bulkhead or tab structure at multiple points, typically nine key load points. The monocoque frame provides a large internal volume for the batteries; a larger battery volume allowing more energy to be stored and therefore better performance.

The motor 34 is kept outside of the frame for improved cool ing. For a high performance motorcycle, the necessity to dissipate heat from the motor is critical. Mounting the motor externally to the battery box gives an improvement over the U.S. patent as it has a massively greater ability to dissipate heat. Also the motor cannot directly radiate or dissipate heat to the inside of the monocoque frame structure to compromise the effectiveness, performance and life of the battery management system, and other high voltage electronics.

The motor 34 is rigidly mounted as a structural stressed member to the monocoque frame and directly is part of the structure that supports the final drive transmission system. This eliminates the need for an additional transmission or motor subframe or mounting system. This maximises the structural efficiency through the whole motorcycle. The gearbox in turn is rigidly mounted to the motor as a structural stressed member.

Referring to figure 1, the swingarm 36 of the rear suspension 26 is mounted on a pivot point 38 that is located forward of the motor output and final chain drive 39. Mounting the swingarm pivot 38 non-coaxially and forward of the motor output and final chain drive 39 reduces chain tension changes during suspension deflection to a level below 5 mm throughout the range of suspension movement. This negates the need for any form of tension idler and reduces complexity, cost, parts count and weight. Thus, this arrangement achieves a good rising rate anti squat characteristics during acceleration of the motorcycle.

Similarly, if the suspension pivots between the motor and the wheel centre, a further increase in the falling rate tendency to resist squat will occur. The geometry of the present system improves on both these options whilst eliminating the need for additional components. A transmission is included to allow placement of the output sprocket in the ideal location and to allow variation of output speed of the motor dependent on a transmission ratio of this unit. In addition, this unit can contain a 2 or 3 speed epicyclic type transmission to allow for changes in speed of the motorcycle.

This arrangement maintains overall handling and performance efficiency, and maintains wheel contact patch to wheel contact patch system wide structural rigidity. It is critical to the handling of the machine. Using the present arrangement, the motor is raised into a position, though overlapping with the swing arm, that allows the swing arm to maintain an efficient structural shape and cross section to give a high structural rigidity and efficiency. This reduces the mass of the swing arm while still achieving high torsional rigidity necessary for good handling.

Referring to figure 2, the battery charger 56 is mounted externally to the monocoque frame and directly to the monocoque frame, for example using moulded inserts in the monocoque frame. It is located again as close to the optimal centre of gravity as possible to allow maximum concentration of masses of the vehicle in order to improve direction changes, handling and manoeuvrability. In addition, to allow cooling of said charger during charger operation and again so as not to close heat within the monocoque frame, which could create negative heat effects to battery systems. Installing the charger within the monocoque frame could cause charger temperature to rise critically and require additional charger cooling systems, adding complexity, weight and cost. This is particularly significant when fast charging is used where the charger must handle very high current transmission.

## Claims

1. An electric motorcycle comprising
a front wheel (20) and front suspension (24)
a rear wheel (22) and rear suspension (26)
an electric motor having a transmission that provides motive force to the rear wheel
, said motorcycle being **characterised by**
a composite monocoque frame (50) extending between the front suspension, and the rear suspension and motor
the monocoque frame being capable of housing a two rows of electric batteries,
the monocoque frame including a primary internal bulkhead (60) that extends between the two rows of batteries, and further secondary bulkheads (62) that separates each battery to create battery compartments, each row aligned with the axis between the mounting of the front suspension (24) on the monocoque frame (50) and the mounting of the rear suspension (26) and motor on the monocoque frame (50).
these bulkheads being connected to the monocoque frame to provide torsional stiffness.

2. A motorcycle according to any previous claim wherein at least one removable composite lid (52) is provided, the lid forming part of the monocoque structure.

3. A motorcycle according to a claim 2 wherein the removable lid (52) seals the batteries against environmental contaminants or water, and/or to provide impact protection and/or sealing, and/or heat and/or electrical insulation, within the monocoque frame (50).

4. A motorcycle according to any previous claim wherein the batteries are individually sealed against environmental contaminants or water, and/or to provide impact protection and/or sealing, and/or heat and/or electrical insulation.

5. A motorcycle according to any previous claim wherein a charger is included for the batteries, the charger being attached externally to the monocoque frame (50).

6. A motorcycle according to any previous claim wherein the monocoque frame being attached to the motor, and rear suspension (26) being attached to the motor, such that the monocoque frame and the motor form a structural component.

7. A motorcycle according to claim 8 wherein the motor is attached to a gearbox and the rear suspension (26) is attached to the gearbox, such that the monocoque frame, motor and gearbox form a structural component.

8. A motorcycle according to any previous claim wherein the front suspension (24) includes a double wishbone assembly, such that each wishbone secured to the monocoque frame (50) by at least two fixing points.

9. A motorcycle according to any previous claim wherein the rear suspension (26) comprises a swingarm, and the motor includes an output means that drives a chain or the like which in turn drives the rear wheel
the swingarm being pivotally mounted on the chassis at a point forward of the axis of the output means.

10. A motorcycle according to any previous claim wherein the composite monocoque frame is produced by resin transfer moulding.

## Patentansprüche

1. Ein elektrisch angetriebenes Motorrad bestehend aus
einem Vorderrand (20) mit Vorderradaufhängung (24)
einem Hinterrad (26) mit Hinterradaufhängung (26)
einem elektrischen Motor mit einem Getriebe, das die Antriebskraft zum Hinterrad weiterleitet; besagtes Motorrad ist **gekennzeichnet durch**
einen Verbundrahmen in Ganzschalenbauweise (50), der sich von der Vorderradaufhängung zu der Hinterradaufhängung und dem Motor erstreckt
wobei an dem Ganzschalenrahmen zwei Reihen elektrischer Akkus angebracht werden können,
der Ganzschalenrahmen eine interne Haupttrennwand (60) beinhaltet, die sich zwischen den beiden Akkureihen befindet, und weitere Trennwände (62) zwischen den einzelnen Akkus, so dass Kammern für die Akkus entstehen; jede Reihe ausgerichtet an der Achse zwischen der Halterung der Vorderradaufhängung (24) auf dem Ganzschalenrahmen (50) und der Halterung der Hinterradaufhängung (26) und dem Motor an dem Ganzschalenrahmen (50)
diese Trennwände sind mit dem Ganzschalenrahmen verbunden, um Drehsteifigkeit zu erreichen

2. Ein Motorrad gemäß jedem bisherigen Patentanspruch, bei dem mindestens eine abnehmbare Verbundklappe (52) vorgesehen ist und die Klappe Teil der Ganzschalenbauweise ist.

3. Ein Motorrad gemäß einem Patentanspruch 2, bei dem die abnehmbare Klappe (52) die Akkus vor umweltbedingten Schadstoffen oder Wasser schützt, und/oder um Aufprallschutz und/oder Abdichtung und/oder Wärmedämmung und/oder Elektroisolierung innerhalb des Ganzschalenrahmens (50) zu bieten.

4. Ein Motorrad gemäß jedem bisherigen Patentanspruch, bei dem die Akkus einzeln gegen umweltbedingte Schadstoffe oder Wasser versiegelt sind, und/oder um Aufprallschutz und/oder Abdichtung und/oder Wärmedämmung und/oder Elektroisolierung zu bieten.

5. Ein Motorrad gemäß jedem bisherigen Patentanspruch, bei dem ein Ladegerät für die Akkus enthalten ist, der außen am Ganzschalenrahmen (50) befestigt ist.

6. Ein Motorrad gemäß jedem bisherigen Patentanspruch, bei dem der Ganzschalenrahmen am Motor befestigt ist und die Hinterradaufhängung (26) am Motor befestigt ist, so dass der Ganzschalenrahmen und der Motor ein Bauteil bilden.

7. Ein Motorrad gemäß Patentanspruch 8, bei dem der Motor am Getriebe befestigt ist und die Hinterradaufliängung (26) am Getriebe befestigt ist, so dass der Ganzschalenralnnen, der Motor und das Getriebe ein Bauteil bilden.

8. Ein Motorrad gemäß jedem bisherigen Patentanspruch, bei dem die Vorderradaufhängung (24) eine Doppelquerlenkerkonstruktion beinhaltet, so dass jeder Querlenker am Ganzschalenrahmen (50) an mindestens zwei Befestigungspunk-ten verankert ist.

9. Ein Motorrad gemäß jedem bisherigen Patentanspruch, bei dem die Hinterradaufhängung (26) einen Schwinghebel beinhaltet, und der Motor eine Ausstoßmethode hat, die eine Kette oder ähnliches antreibt, die wiederum das Hinterrad antreibt.
Dieser Schwinghebel ist zentral am Chassis an einem Funkt weiter vorne an der Achse von der Ausstoßmethode angebracht.

10. Ein Motorrad gemäß jedem bisherigen Patentanspruch, bei dem der Verbundrahmen in Ganzschalenbauweise im Harzinjektionsverfahren gefertigt wird.

## Revendications

1. Une motocyclette incluant :
une roue avant (20) ainsi qu'une suspension avant (24) ;
une roue arrière (26) et une suspension arrière (26) ;
un moteur électrique avec une transmission qui procure la force motrice de la roue arrière, ladite motocyclette étant **caractérisée par** :
un cadre monocoque en composite (50) qui s'étend de la suspension avant à la suspension arrière y compris le moteur.
Le cadre monocoque est en mesure de loger deux rangées de batteries électriques.
Le cadre monocoque inclut une cloison écran interne principale (60) qui s'étend entre les deux rangées de batteries en plus d'une cloison écran secondaire (62) qui sépare chaque batterie pour créer des compartiments de batteries, chaque rangée étant alignée sur l'axe se trouvant entre le montant de la suspension avant (24) sur le cadre monocoque (50) et le montant de la suspension arrière (26), et le moteur sur le cadre monocoque (50).
Ces cloisons écran sont connectées au cadre monocoque pour fournir une rigidité de la torsion.

2. Une motocyclette, sur laquelle, d'après toute revendication précédente, au moins un capot composite amovible (52) est fourni, le capot faisant partie de la structure monocoque.

3. Une motocyclette où, selon la revendication 2, le capot amovible (52) fait office de protection scellée des batteries contre l'eau ou les contaminants environnementaux et/ou fournit une protection contre les impacts et/ou une étanchéité et/ou une isolation électrique et/ou contre la chaleur, au sein du cadre monocoque (50).

4. Une motocyclette, conformément à toute revendication précédente, où les batteries sont protégées individuellement par joint étanche contre l'eau ou les contaminants environnementaux et/ou protégées contre les impacts et/ou dotées d'une isolation électrique et/ou contre la chaleur.

5. Une motocyclette qui, d'après toute revendication précédente, inclut un chargeur pour les batteries, lequel est joint au cadre monocoque (50) sur l'extérieur.

6. Une motocyclette qui, selon les revendications précédentes, a le cadre monocoque fixé au moteur et la suspension arrière (26) jointe au moteur de telle manière que le cadre monocoque et le moteur forment un composant structurel.

7. Une motocyclette qui, d'après la revendication 8 ci-après, a le moteur joint à une boîte de vitesses et où une suspension arrière (26) est jointe à la boîte de vitesses de façon à ce que le cadre monocoque, le moteur et la boîte de vitesse forment un composant structurel.

8. Une motocyclette, conformément à toute revendication précédente, où la suspension avant (24) inclut un assemblage à deux triangles, de manière à ce que chaque triangle soit fixé au cadre monocoque (50) à au moins deux endroits.

9. Une motocyclette où, conformément à toute revendication précédente, la suspension arrière (26) est composée d'un bras oscillant et où le moteur inclut un support de puissance qui entraîne une chaîne ou tout élément semblable qui à son tour entraîne la roue arrière.
Le bras oscillant est monté en pivot sur le châssis à un endroit sur l'avant de l'axe du support de puissance.

10. Une motocyclette où, selon toute autre revendication, le cadre monocoque en composite est fabriqué par moulage par transfert de résine.
